# EUROPÄISCHE PATENTSCHRIFT

(11) **EP 0 977 680 B1**
(45) Veröffentlichungstag und Bekanntmachung des Hinweises auf die Patenterteilung: **27.07.2005**
(21) Anmeldenummer: 99934220.7
(22) Anmeldetag: 20.01.1999
(51) Int. Cl.: B60S 1/16, B60S 1/34

(54) **WISCHERLAGER**
WIPER BEARING
PALIER POUR ESSIUE-GLACE

(30) Priorität: 03.02.1998 DE 19804135
(43) Veröffentlichungstag der Anmeldung: 09.02.2000
(73) Patentinhaber: ROBERT BOSCH GMBH, 70442 Stuttgart (DE)
(72) Erfinder: Zimmer, Joachim, 77880 Sasbach (DE)
(86) Internationale Anmeldenummer: PCT/DE1999/000114
(87) Internationale Veröffentlichungsnummer: WO 1999/039945

(56) Entgegenhaltungen:
- EP-A- 0 511 832
- EP-A- 0 771 958
- EP-A- 0 798 182
- FR-A- 2 713 178

## Beschreibung

### Stand der Technik

Die Erfindung geht aus von einem Wischerlager nach dem Oberbegriff des Anspruchs 1.

Wischeranlagen mit mehreren Scheibenwischern für Kraftfahrzeuge werden mit deren Wischerlager direkt oder indirekt über eine Platine an der Karosserie des Kraftfahrzeugs befestigt. Die Platine trägt einen Wischerantrieb mit einem Wischermotor, dessen Motorwelle über ein Gestänge Kurbeln antreibt, die mit einem Ende einer Antriebswelle für jeden Scheibenwischer fest verbunden sind. Es ist auch möglich, daß nur die Antriebswelle eines Scheibenwischers vom Wischermotor angetrieben wird, während ein anderer Scheibenwischer über ein Viergelenkhebelgetriebe mit dem ersten Scheibenwischer verbunden ist und eine Lagerachse besitzt. Die Antriebswelle bzw. die Lagerachse ist in einem Wischerlager gelagert. Im Folgenden treffen die Ausführungen zu einer Antriebswelle auch für eine Lagerachse sinngemäß zu, die wegen der Vereinfachung nicht mehr ausdrücklich genannt wird.

Aus der EP-A-0 798 182 ist ein Wischerlager bekannt, bei dem in dem Lagergehäuse mindestens ein radiales Lager und an den Stirnseiten zwischen dem Lagergehäuse und einem mit der Antriebswelle drehfest verbundenen Teil, z. B. Anlaufringen oder einem Anlaufring und einer Kurbelplatte der Kurbel, axiale Lager vorgesehen sind. Die Antriebswelle ragt üblicherweise aus einer Karosserie eines Kraftfahrzeugs und bewegt einen an ihrem freien Ende befestigten Scheibenwischer über eine Windschutzscheibe. Um zu vermeiden, dass schädliche Stoffe, wie Schmutz, Wasser, in Wasser gelöste aggressive Stoffe, wie Salz und Luftverunreinigungen in die Lagerspalte gelangen und die Lager zerstören, werden die Lagerspalte nach außen abgedichtet.

Das bekannte Lagergehäuse weist hierfür an einer Stirnseite zur Antriebswelle hin einen Freiraum auf, in dem ein O-Ring angeordnet ist, der unter Vorspannung an dem Anlaufring und am Lagergehäuse sowie an der Antriebswelle anliegt. Bei Lagergehäusen aus Druckguss und eingepressten Lagerbuchsen, in der Regel aus Sinterwerkstoff, reicht das Lagergehäuse über die radialen Lagerflächen heraus, wobei durch Aussparungen im Bereich der Stirnseiten des Lagergehäuses der Freiraum gebildet wird. Bei Lagergehäusen aus Kunststoff ist der Freiraum angeformt. Solche Dichtungen verlängern die axiale Erstrekkung des Lagergehäuses, schützen nur die radialen Lager und weisen eine relativ hohe Reibung auf.

### Vorteile der Erfindung

Nach der Erfindung ist die Dichtung mit einem radialen Abstand zum radialen Lager außerhalb des axialen Lagers angeordnet und die Lagerspalte der axialen und radialen Lager sind nach außen abgedichtet, sodass im Vergleich zu der bekannten Lösung mit einem O-Ring neben den radialen Lagern zusätzlich die axialen Lager vor Schadstoffen geschützt sind. Dies ist besonders vorteilhaft bei Lagergehäusen aus Kunststoff, die wegen ihrer geringen Kosten und ihres kleinen Gewichts zunehmend eingesetzt werden, aber häufig weniger widerstandsfähig gegen Wasser und Schadstoffe sind als z. B. Lagergehäuse aus Druckguß (Zink oder Aluminium). Der Kunststoff kann insbesondere in belasteten, ungeschützten Lagern frühzeitig altern bzw. verspröden. Da somit die guten Gleiteigenschaften erhalten bleiben, ist bei geringem Verschleiß und niedriger Reibung eine lange Lebensdauer gewährleistet. Dadurch kann während der gesamten Lebensdauer ein geringes Lagerspiel eingehalten werden, was sich günstig auf das Schwingungsverhalten des Scheibenwischers und damit auf die Wischqualität auswirkt. Ferner beansprucht die erfindungsgemäße Dichtungsanordnung keinen zusätzlichen axialen Bauraum, so daß der zur Verfügung stehende Platz für eine lange Lagerbasis der radialen Lager verwendet werden kann. Insbesondere können hohe Querkräfte bei niedriger, spezifischer Materialbelastung aufgenommen werden. Somit können weichere Materialien, wie beispielsweise Kunststoff, auch bei einer langen Lebensdauer eingesetzt werden.

In einer Ausgestaltung der Erfindung ist die Dichtung drehfest mit dem Lagergehäuse verbunden und liegt mit einer axial wirkenden Dichtlippe an dem Anlaufring bzw. der Kurbelplatte im äußeren, sich radial an die axialen Lager anschließenden Bereich an. Als Dichtung wird vorzugsweise eine axiale Lippendichtung verwendet. Bei der Lippendichtung kann mit einer geringen Pressung, einer kleinen Gleitreibfläche und damit mit einer geringen Gleitreibung gut abgedichtet werden. Die Lippendichtung besitzt im Dauerbetrieb einen kleinen Verschleiß und ein Wischerantrieb muß beim Start aufgrund einer kleinen Haftreibung nur kleine Losreißkräfte aufbringen. Möglich ist auch anstatt einer Lippendichtung eine berührungslose Dichtung zu verwenden, beispielsweise eine Labyrinthdichtung, wodurch die Gleitreibung für die Dichtung vollständig entfällt.

Die Dichtung ist zweckmäßigerweise in einer Ausnehmung des Lagergehäuses angeordnet. In einer Ausgestaltung der Erfindung besitzt das Lagergehäuse, das in der Regel aus Gußeisen besteht, eingepreßte Lagerbuchsen, z. B. aus Sinterwerkstoff. An einer oder an beiden Stirnseiten ragen die Lagerbuchsen über das Lagergehäuse heraus und bilden neben radialen Lagern gleichzeitig Lagerflächen für axiale Lager an einem Anlaufring oder einer Kurbelplatte der Antriebswelle. Dadurch entsteht zwischen dem Lagergehäuse und dem Anlaufring bzw. der Kurbelplatte eine Ausnehmung, in der günstig die Dichtung untergebracht werden kann. Ferner kann trotz eines kurzen und damit leichten und platzsparenden Lagergehäuses ein radiales Lager erreicht werden, das über eine große axiale Lagerbasis verfügt. Ein für das radiale Lager verwendetes günstiges Material wird gleichzeitig für das axiale Lager genutzt, wodurch günstig eine geringe Reibung an dem axialen Lager erreicht werden kann.

Ferner wird vorgeschlagen, die Lagergehäuse und die Dichtung als Zweikomponentenbauteil auszuführen, d.h. aus einem festen Kunststoffteil und einer weichen Dichtung, beispielsweise Lippendichtung. Die Bauteile und der Montageaufwand werden dadurch reduziert.

Um den von außen sichtbaren Teil der Antriebswelle und des Lagergehäuses formschön zu gestalten und insbesondere die Lager vor direktem Spritzwasser zu schützen, ist es bekannt, auf der Antriebswelle eine Schutzkappe drehfest anzuordnen, die das nach außen aus der Karosserie vorstehende Ende des Lagergehäuses umschließt. In einer Ausgestaltung der Erfindung wird die Schutzkappe gleichzeitig dazu verwendet, eine radiale Dichtfläche für eine radiale Dichtung zu bilden, die das axiale und das radiale Lager der Antriebswelle abdichtet. Im Bereich des axialen Lager entfällt dadurch die Ausnehmung für die Dichtung, wodurch diese bei nahezu gleichem radialen Bauraum größer ausgeführt werden kann. Die Schutzkappe kann vorzugsweise mit der Dichtung als Zweikomponentenbauteil oder als einstückiges Bauteil aus gummielastischem Material ausgeführt werden. Die einzelnen Bauteile und der Montageaufwand werden somit reduziert. Die Schutzkappe wird auf die Welle aufgepreßt und/oder nach einer Ausgestaltung der Erfindung über einen Welleneinstich mit dieser verrastet, wodurch die Schutzkappe bei der Montage schnell und exakt positioniert werden kann, nach der Montage in beiden axialen Richtungen sicher fixiert ist und im Einsatz nicht verrutscht, was zu einem Funktionsausfall der Dichtung führen würde.

Die Dichtung ist vorzugsweise eine Lippendichtung, wobei auch andere Dichtungsarten allein oder in Ergänzung möglich sind, die axial und/oder radial wirken können, wie beispielsweise berührungslose Labyrinthdichtungen. Um die Schutzkappe leicht montieren zu können, ohne die Dichtung zu beschädigen und/oder umzuklappen, besitzen die Lagergehäuse in Montagerichtung eine Fügeschräge.

Eine weitere Ausgestaltung der Erfindung besteht darin, auf der Seite der Kurbelplatte eine Gummimanschette an dem Lagergehäuse zu befestigen. Die Gummimanschette stützt sich dabei vorzugsweise in einer ersten, von der axialen Lager abweisenden Richtung an dem Lagergehäuse und in einer zweiten axialen Richtung an der Kurbelplatte oder an einem Anlaufring ab, und dichtet dabei das radiale und das axiale Lager nach außen ab.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Lagergehäuse eines Wischerlagers,
- Fig. 2: einen vergrößerten Ausschnitt II aus Fig. 1,
- Fig. 3: ein Lagergehäuse aus Kunststoff,
- Fig. 4: einen vergrößerten Ausschnitt IV aus Fig. 3,
- Fig. 5: eine Variante nach Fig. 4,
- Fig. 6: ein beidseitig abgedichtetes Lagergehäuse,
- Fig. 7: ein Lagergehäuse mit einer oben angeordneten Kurbelplatte,
- Fig. 8: ein Lagergehäuse mit einer Schutzkappe,
- Fig. 9: einen vergrößerten Ausschnitt IX in Fig. 8,
- Fig. 10: ein Variante nach Fig. 9,
- Fig. 11: einen vergrößerten Ausschnitt XI in Fig. 8,
- Fig. 12: eine Zweikomponenten-Schutzkappe,
- Fig. 13: eine Schutzkappe und eine Dichtung als einstückiges Bauteil aus gummielastischem Material,
- Fig. 14: eine Variante nach Fig. 12 und
- Fig. 15: eine über einen Welleneinstich gesicherte Schutzkappe.

### Beschreibung der Ausführungsbeispiele

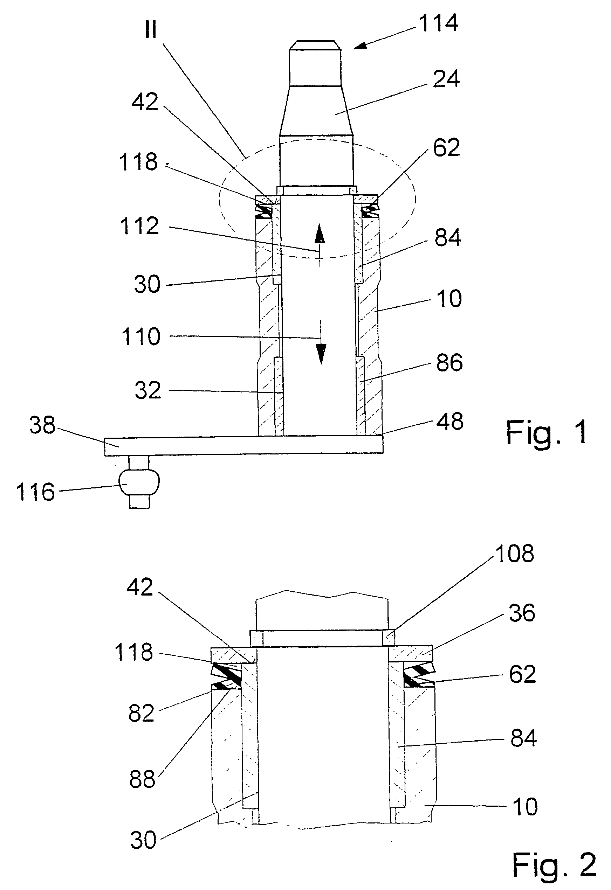

Fig. 1 zeigt ein Lagergehäuse 10 eines Wischerlagers aus Gußeisen mit zwei eingepreßten Lagerbuchsen 84, 86 aus Sinterwerkstoff. Das Lagergehäuse 10 und die Lagerbuchsen 84, 86 können auch aus verschiedenen Materialien bestehen und in verschiedener Weise miteinander verbunden werden, beispielsweise durch eine kraftschlüssige, formschlüssige und/oder durch eine stoffschlüssige Verbindung. In den Lagerbuchsen 84, 86 ist eine Antriebswelle 24 über zwei radialen Lagern 30, 32 in Form von Gleitlagern gelagert. Die Antriebswelle 24 stützt sich in einer ersten axialen Richtung 110 mit einem drehfesten Spannring 108 über einen Anlaufring 36 auf einem ersten axialen Lager 42 ab, dessen eine Lagerfläche von einer Stirnseite der Lagerbuchse 84 gebildet wird. In einer zweiten axialen Richtung 112 stützt sich die Antriebswelle 24 mit einer Kurbelplatte 38 an einem zweiten axialen Lager 48 ab. Auch die axialen Lager 42, 48 sind als Gleitlager ausgebildet. Das Lagergehäuse 10 wird in einer rohrförmigen Ausnehmung einer nicht dargestellten, fest mit einem Fahrzeug verbundenen Platine befestigt. Die Antriebswelle 24 ragt mit einem Ende 114 aus der Fahrzeugkarosserie, auf dem ein Scheibenwischer befestigt ist. Wird eine vollständig montierte Wischeranlage betätigt, treibt ein Motor über eine Motorwelle, ein Gestänge, eine Gelenkkugel 116 und über die Kurbelplatte 38 die damit verbundene Antriebswelle 24 an, die den Scheibenwischer über eine Windschutzscheibe bewegt. Um die Lager 42, 30, 32, 48 vor Wasser und Schadstoffen zu schützen, wird das Lagergehäuse 10 insbesondere auf der Seite nach außen abgedichtet, die zu dem aus der Karosserie ragenden Ende 114 weist.

Erfindungsgemäß ragt die Lagerbuchse 84 über die Stirnseite 88 des Lagergehäuses 10 hinaus und bildet neben dem radialen Lager 30 das axiale Lager 42 für die Antriebswelle 24. Die Antriebswelle 24 wird in axialer Richtung 110 mit geringer Reibung auf der Lagerbuchse 84 gelagert. Ferner bildet sich zwischen dem Lagergehäuse 10 und dem Anlaufring 36 ein Zwischenraum 118, in den günstig eine axiale Lippendichtung 62 mit einer axial wirkenden Lippe 82 eingesetzt werden kann. Die Lippendichtung 62 dichtet das axiale Lager 42 und das radiale Lager 30 zum Ende 114 der Antriebswelle 24 nach außen ab. Der Verschleiß wird reduziert und die Lebensdauer erhöht, insbesondere mit geringem axialem Lagerspiel. Ferner befindet sich die Dichtung 62 radial außerhalb des radialen Lagers 30. Trotz kleiner Baulänge des Lagergehäuses 10, reichen die radialen Lager 30 und 32 über einen großen axialen Abstand. Der Bereich II in Fig. 1 ist in Fig. 2 vergrößert dargestellt. Bei der Beschreibung der weiteren Ausführungsbeispiele werden für gleichbleibende Bauteile die gleichen Bezugszeichen verwendet.

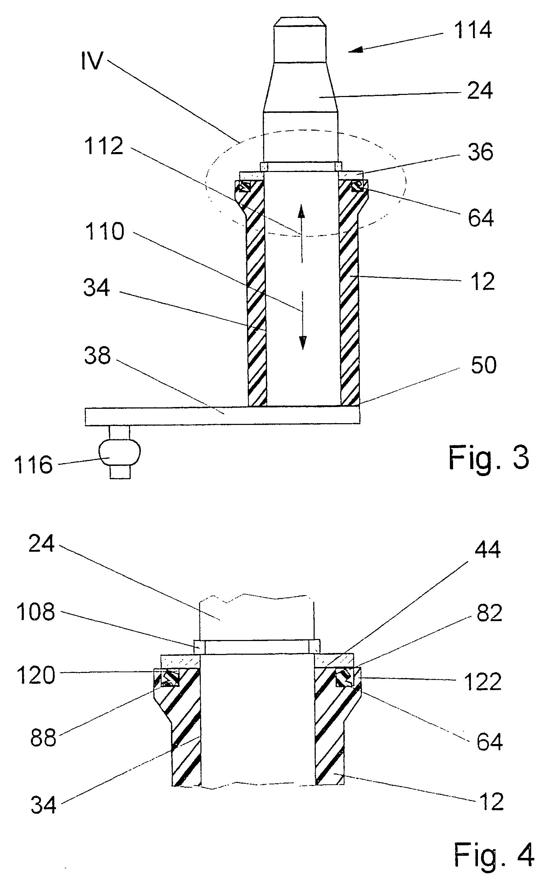

In den Fig. 3 bis 15 sind Lagergehäuse 12, 14, 16, 18, 20, 22 124 aus Kunststoff dargestellt, wobei die Lagerflächen der Lager 34, 44, 46, 50 52, 54, 56, 58, 60 unmittelbar am Lagergehäuse 12, 14, 16, 18, 20, 22 124 vorgesehen sind. Um möglichst leichte und kostengünstige Lagergehäuse zu erreichen, werden diese zunehmend aus Kunststoff gefertigt. Das Lagergehäuse 12 in Fig. 3 hat im radial äußeren Bereich eines axialen Lagers 44 in Richtung 112 zum Ende 114 der Antriebswelle 24 eine Ausnehmung 120, in die eine axiale Lippendichtung 64 eingepreßt ist. Möglich ist auch, die Lippendichtung 64 mit sonstigen formschlüssigen, kraftschlüssigen und/oder stoffschlüssigen Verbindungen in dem Lagergehäuse 12 zu befestigen. Das Lagergehäuse 12 weist im Bereich der Lippendichtung 64 eine höhere Wandstärke auf, so daß trotz der Ausnehmung 120 ein ausreichend großes axiales Lager 44 erreicht wird. Die Ausnehmung 120 schützt die Lippendichtung 64 mit einem Steg 122 vor äußeren Einflüssen, beispielsweise, daß die Lippendichtung 64 bei der Montage beschädigt wird. Die Lippendichtung 64 dichtet das axiale Lager 44 und das radiale Lager 34 zum Ende 114 der Antriebswelle 24 nach außen ab. Die Lager 34, 44 sind vor Umwelteinflüssen geschützt und es kann die gesamte Länge des Lagergehäuses 12 für eine Lagerbasis des radialen Lagers 34 genutzt werden. Dadurch können von dem Lagergehäuse 12 große Querkräfte aufgenommen werden, ohne daß das radiale Lager 34 ausschlägt. Fig. 4 zeigt einen als IV bezeichneten Ausschnitt vergrößert.

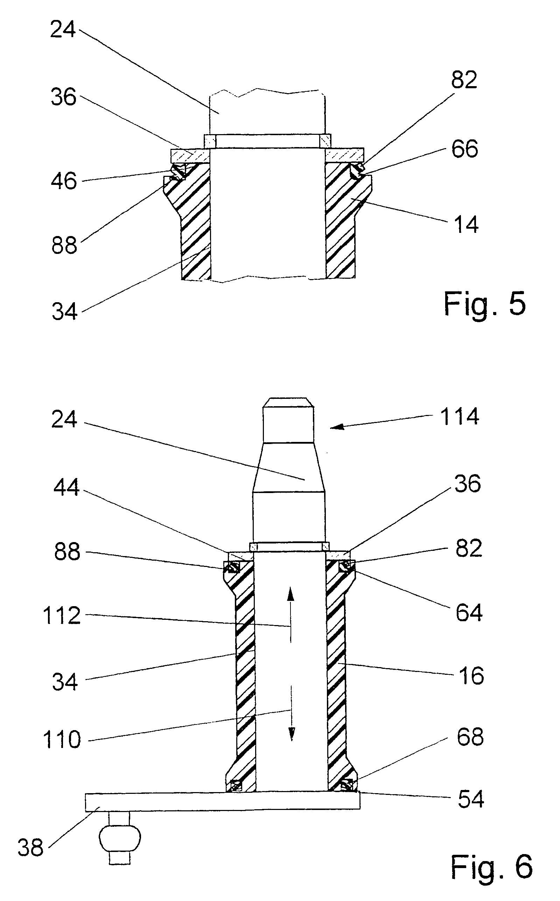

In Fig. 5 wird das Lagergehäuse 14 und eine Dichtung 66 von einem Zweikomponentenbauteil gebildet. Die Dichtung 66 dichtet ein axiales Lager 46 und das radiale Lager 34 nach außen ab. Die einzelnen Bauteile werden reduziert und damit der Fertigungsaufwand und/oder der Montageaufwand.

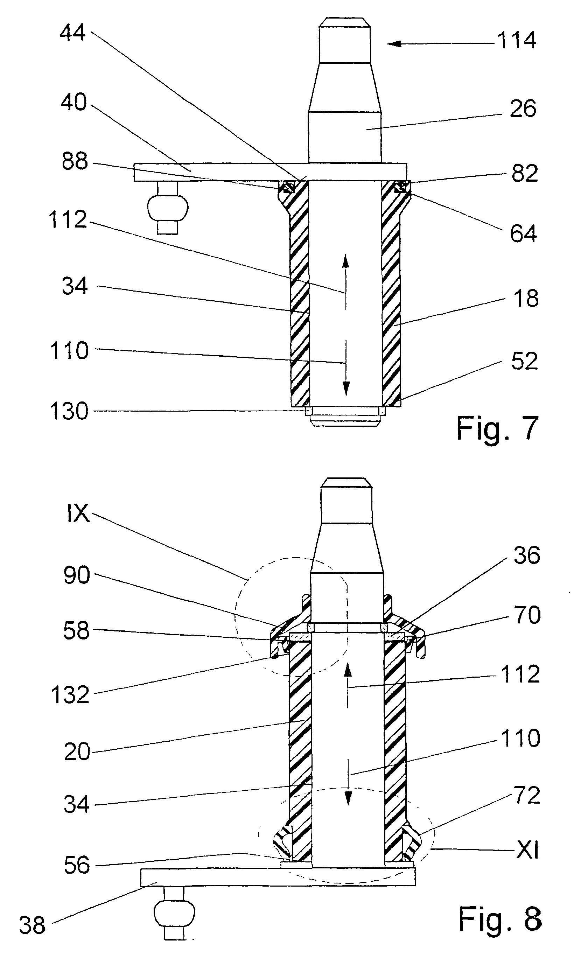

In Fig. 3 stützt sich die Antriebswelle 24 in Richtung 112 mit der Kurbelplatte 38 an einem axialen Lager 50 ab, das nicht zusätzlich nach außen abgedichtet ist. Unter besonderen Umständen kann es jedoch erforderlich sein, sämtliche Lager 44, 34, 54 des Lagergehäuses 16 beidseitig abzudichten (Fig. 6), beispielsweise bei Fahrzeugen, die unter erschwerten Einsatzbedingungen betrieben werden oder bei einem besonders gegen äußere Einflüsse empfindlichen Material des Lagergehäuses 16. Das Lager 54 zwischen der Kurbelplatte 38 und dem Lagergehäuse 16 wird in dem Ausführungsbeispiel in Fig. 6 entsprechend mit einer der in Fig. 3 und 4 dargestellten Dichtung 68 abgedichtet. Sämtliche erfindungsgemäße Lösungen können jedoch grundsätzlich auf beiden Seiten des Lagergehäuses verwendet werden. Insbesondere können die erfindungsgemäßen Lösungen auch bei einer oben angeordneten Kurbelplatte 40 verwendet werden (Fig. 7). In dem Lagergehäuse 18 ist eine Antriebswelle 26 in Richtung 112 zu dem aus der Karosserie ragenden Ende 114 mit einem Ring 130 über ein erstes unteres axiales Lager 52 und mit der Kurbelplatte 40 über ein zweites oberes axiales Lager 44 axial fixiert. Das obere Lager 44 zwischen der Kurbelplatte 40 und dem Lagergehäuse 18 wird entsprechend dem in Fig. 3 und 4 beschriebenen Ausführungsbeispiel nach außen abgedichtet.

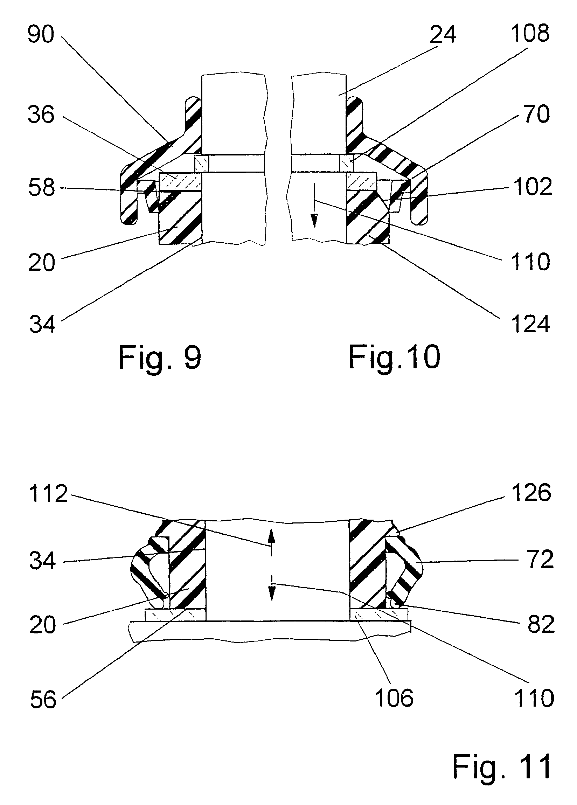

Fig. 8 zeigt eine Ausführungsform mit einer Schutzkappe 90, die mit der Antriebswelle 24 drehfest verbunden ist und über die Stirnseite des Lagergehäuses 20 in Richtung 110 der Kurbelplatte 38 ragt. Die Schutzkappe 90 stützt sich in Montagerichtung 110 an dem Spannring 108 ab und kann dadurch bei der Montage schnell und exakt positioniert werden. Zwischen der Schutzkappe 90 und dem Lagergehäuse 20 ist eine radiale Lippendichtung 70 angeordnet, die drehfest mit der Schutzkappe 90 verbunden ist. Ein axiales Lager 58 und das radiale Lager 34 werden mit der Lippendichtung 70 an einer radialen Dichtfläche 132 des Lagergehäuses 20 nach außen abgedichtet. Die Antriebswelle 24 wird durch die Schutzkappe 90 formschön gestaltet, vor direktem Spritzwasser geschützt und insbesondere kann die gesamte Wandstärke des Lagergehäuses 20 als Lagerfläche des axialen Lagers 54 genutzt werden (Fig. 8, 9). Um die Montage zu erleichtern und insbesondere nicht die Lippendichtung 70 dabei zu zerstören, hat das Lagergehäuse 124 in Fig. 10 in Montagerichtung 110 der Schutzkappe 90 eine Fugeschräge 102.

Fig. 11 zeigt einen vergrößerten Ausschnitt XI aus Fig. 8. Zur Kurbelplatte 38 ist auf dem Lagergehäuse 20 eine Gummimanschette 72 angeordnet. Die Gummimanschette 72 stützt sich in Richtung 112 an einem angeformten Vorsprung 126 des Lagergehäuses 20 und in Richtung 110 an der Kurbelplatte 38 bzw. an einem Anlaufring 106 ab. Dabei dichtet sie ein axiales Lager 56 zwischen dem Lagergehäuse 20 und dem Anlaufring 106 und das radiale Lager 34 nach außen sicher ab.

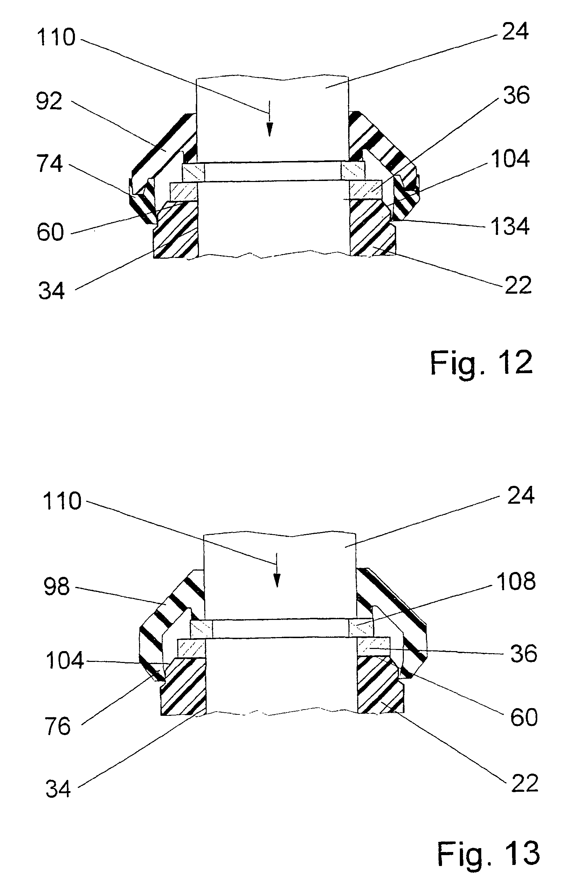

In dem Ausführungsbeispiel in Fig. 12 ist eine feste Kunststoffschutzkappe 92 mit einer gummielastischen Dichtung 74 als Zweikomponentenbauteil ausgeführt, die an einer radialen Dichtfläche 134 ein axiales Lager 60 und das radiale Lager 34 abdichten. Um die Schutzkappe 92 mit der Dichtung 74 sicher montieren zu können, ohne daß die Dichtung 74 dabei beschädigt wird, hat das Lagergehäuse 22 in Montagerichtung 110 der Schutzkappe 92 eine Fügeschräge 104. In Fig. 13 ist eine Schutzkappe 98 und eine Dichtung 76 einstückig aus gummielastischem Material dargestellt.

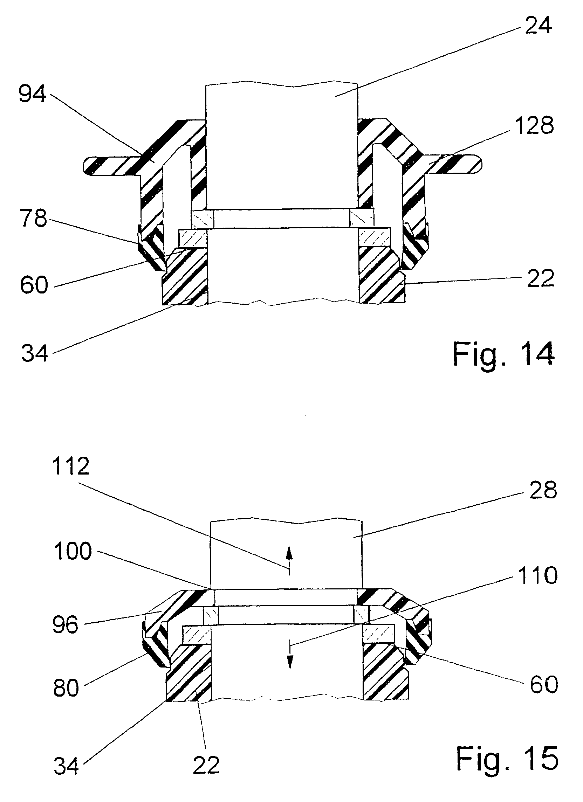

Ein Ausführungsbeispiel in Fig. 14 zeigt eine Schutzkappe 94 mit einer Dichtung 78 als Zweikomponentenbauteil. Die Schutzkappe 94 hat einen sich in radialer Richtung erstreckenden Vorsprung 128, mit dem günstig die Montageöffnung in der Fahrzeugkarosserie verschlossen werden kann.

In einem weiteren Ausführungsbeispiel ist eine Schutzkappe 96 mit einer Dichtung 80 in einem Welleneinstich 100 einer Antriebswelle 28 verrastet. Die als Zweikomponentenbauteil ausgeführte Schutzkappe 96 ist nach der Montage sicher in beiden axialen Richtungen 110, 112 fixiert. Die Schutzkappe 96 verrutscht nicht, was sonst zu einem Funktionsausfall der Dichtung 80 führen kann.

### Bezugszeichen

- 10: Lagergehäuse
- 12: Lagergehäuse
- 14: Lagergehäuse
- 16: Lagergehäuse
- 18: Lagergehäuse
- 20: Lagergehäuse
- 22: Lagergehäuse
- 24: Antriebswelle
- 26: Antriebswelle
- 28: Antriebswelle
- 30: radiale Lager
- 32: radiale Lager
- 34: radiale Lager
- 36: Anlaufring
- 38: Kurbelplatte
- 40: Kurbelplatte
- 42: axiale Lager
- 44: axiale Lager
- 46: axiale Lager
- 48: axiale Lager
- 50: axiale Lager
- 52: axiale Lager
- 54: axiale Lager
- 56: axiale Lager
- 58: axiale Lager
- 60: axiale Lager
- 62: Dichtung
- 64: Dichtung
- 66: Dichtung
- 68: Dichtung
- 70: Dichtung
- 72: Dichtung
- 74: Dichtung
- 76: Dichtung
- 78: Dichtung
- 80: Dichtung
- 82: Dichtlippe
- 84: Lagerbuchse
- 86: Lagerbuchse
- 88: Stirnseite
- 90: Schutzkappe
- 92: Schutzkappe
- 94: Schutzkappe
- 96: Schutzkappe
- 98: Schutzkappe
- 100: Welleneinstich
- 102: Fügeschräge
- 104: Fügeschräge
- 106: Anlaufring
- 108: Spannring
- 110: axiale Richtung
- 112: axiale Richtung
- 114: Ende
- 116: Gelenkkugel
- 118: Zwischenraum
- 120: Ausnehmung
- 122: Steg
- 124: Lagergehäuse
- 126: Vorsprung
- 128: Vorsprung
- 130: Ring
- 132: Dichtfläche
- 134: Dichtfläche

## Patentansprüche

1. Wischerlager mit einem Lagergehäuse (10, 12, 14, 16, 18, 20, 22, 124), in dem eine Antriebswelle (24, 26, 28) mit einem radialen Lager (30, 32, 34) gelagert und über einen Anlaufring (36, 106) und über eine Kurbelplatte (38, 40), die mit der Antriebswelle (24, 26, 28) fest verbunden sind und mit dem Lagergehäuse direkt oder indirekt axiale Lager (42, 44, 46, 48, 50, 52, 54, 56, 58, 60) bilden, stirnseitig geführt ist, wobei eine Dichtung (62, 64, 66, 68, 70, 72, 74, 76, 78, 80) dichtend zwischen dem Lagergehäuse (10, 12, 14, 16, 18, 20, 22, 124) und einem mit der Antriebswelle (24, 26, 28) festverbundenen Teil (36, 106, 38, 40, 90, 92, 94, 96, 98) angeordnet ist, wobei die Dichtung (62, 64, 66, 68, 70, 72, 74, 76, 78, 80) mit einem radialen Abstand zum radialen Lager (30, 32, 34) außerhalb des axialen Lagers 42, 44, 46, 48, 50, 52, 54, 56, 58, 60) angeordnet ist, **dadurch gekennzeichnet, daß** die Dichtung (62, 64, 66, 68, 70, 72, 74, 76, 78, 80) die Lagerspalte der axialen und radialen Lager (42, 44, 46, 54, 56, 58, 60; 30, 32, 34) nach außen abdichtet.

2. Wischerlager nach Anspruch 1, **dadurch gekennzeichnet, dass** die Dichtung (62, 64, 66, 72) drehfest mit dem Lagergehäuse (10, 12, 14, 16, 18, 20) verbunden ist und mit einer axial wirkenden Dichtlippe (82) an dem Anlaufring (36, 106) bzw. der Kurbelplatte (38, 40) im äußeren, sich radial an die axialen Lager (42, 44, 46, 54, 56)anschließenden Bereich anliegt.

3. Wischerlager nach Anspruch 2, **dadurch gekennzeichnet, daß** das Lagergehäuse (10) eingepreßte Lagerbuchsen (84, 86) aufweist und zumindest eine Lagerbuchse (84, 86) an der Stirnseite (88) über das Lagergehäuse (10) ragt und ihre Stirnfläche eine Lagerfläche für die axialen Lager (42) an dem Anlaufring (36) oder an der Kurbelplatte (38) bildet, wobei die Dichtung (62) zwischen der Stirnseite (88) des Lagergehäuses (10) und dem Anlaufring (36) oder der Kurbelplatte (38) angeordnet ist.

4. Wischerlager nach einem der vorhergehenden Ansprüche, **dadurch gekennzeichnet, daß** das Lagergehäuse (12, 14, 16, 18, 20, 22, 124) aus Kunststoff ist.

5. Wischerlager nach Anspruch 4, **dadurch gekennzeichnet, daß** das Lagergehäuse (14) und die Dichtung (66) als Zweikomponentenbauteil ausgeführt sind.

6. Wischerlager nach einem der vorhergehenden Ansprüche, **dadurch gekennzeichnet, daß** eine Schutzkappe (90, 92, 94, 96, 98) mit der Antriebswelle (24) drehfest und dichtend verbunden ist und zwischen der Schutzkappe (90, 92, 94, 96, 98) und dem Lagergehäuse (20, 22, 124) eine radiale Dichtung (70, 74, 76, 78, 80) angeordnet ist.

7. Wischerlager nach Anspruch 6, **dadurch gekennzeichnet, daß** die Schutzkappe (92, 94, 96) und die Dichtung (74, 78, 80) als Zweikomponentenbauteil ausgeführt sind.

8. Wischerlager nach Anspruch 6, **dadurch gekennzeichnet, daß** die Schutzkappe (98) und die Dichtung (76) einstückig aus gummielastischem Material ausgeführt sind.

9. Wischerlager nach einem der Ansprüche 6 bis 8, **dadurch gekennzeichnet, daß** die Schutzkappe (96) in einem Welleneinstich (100) verrastet ist.

10. Wischerlager nach einem der Ansprüche 6 bis 9, **dadurch gekennzeichnet, daß** das Lagergehäuse (124, 22) an der Stirnseite zur Schutzkappe (90, 92, 94, 96, 98) eine Fügeschräge (102, 104) hat.

11. Wischerlager nach einem der vorhergehenden Ansprüche, **dadurch gekennzeichnet, daß** auf der Seite der Kurbelplatte (38) eine Gummimanschette (72) auf dem Lagergehäuse (20) befestigt ist und diese gegen einen Anlaufring (106) oder gegen die Kurbelplatte (38) das axiale Lager (56) und das radiale Lager (34) nach außen abdichtet.

## Claims

1. Wiper bearing having a bearing housing (10, 12, 14, 16, 18, 20, 22, 124) in which a drive shaft (24, 26, 28) with a radial bearing (30, 32, 34) is mounted and is guided on the end side via a thrust ring (36, 106) and via a crank plate (38, 40), which ring and plate are connected fixedly to the drive shaft (24, 26, 28) and, directly with the bearing housing or indirectly, form axial bearings (42, 44, 46, 48, 50, 52, 54, 56, 58, 60), a seal (62, 64, 66, 68, 70, 72, 74, 76, 78, 80) being arranged in a sealing manner between the bearing housing (10, 12, 14, 16, 18, 20, 22, 124) and a part (36, 106, 38, 40, 90, 92, 94, 96, 98) connected fixedly to the drive shaft (24, 26, 28), the seal (62, 64, 66, 68, 70, 72, 74, 76, 78, 80) being arranged outside the axial bearing (42, 44, 46, 48, 50, 52, 54, 56, 58, 60) at a radial distance from the radial bearing (30, 32, 34), **characterized in that** the seal (62, 64, 66, 68, 70, 72, 74, 76, 78, .80) seals off the bearing gaps of the axial and radial bearings (42, 44, 46, 54, 56, 58, 60; 30, 32, 34) to the outside.

2. Wiper bearing according to Claim 1, **characterized in that** the seal (62, 64, 66, 72) is connected in a rotationally fixed manner to the bearing housing (10, 12, 14, 16, 18, 20) and, by means of an axially acting sealing lip (82), bears against the thrust ring (36, 106) or the crank plate (38, 40) in the outer region radially adjoining the axial bearings (42, 44, 46, 54, 56).

3. Wiper bearing according to Claim 2, **characterized in that** the bearing housing (10) has pressed-in bearing bushings (84, 86) and at least one bearing bushing (84, 86) protrudes at the end side (88) over the bearing housing (10) and its end surface forms a bearing surface for the axial bearings (42) on the thrust ring (36) or on the crank plate (38), the seal (62) being arranged between the end side (88) of the bearing housing (10) and the thrust ring (36) or the crank plate (38).

4. Wiper bearing according to one of the preceding claims, **characterized in that** the bearing housing (12, 14, 16, 18, 20, 22, 124) is made from plastic.

5. Wiper bearing according to Claim 4, **characterized in that** the bearing housing (14) and the seal (66) are designed as a two-component component.

6. Wiper bearing according to one of the preceding claims, **characterized in that** a protective cap (90, 92, 94, 96, 98) is connected to the drive shaft (24) in a rotationally fixed and sealing manner, and a radial seal (70, 74, 76, 78, 80) is arranged between the protective cap (90, 92, 94, 96, 98) and the bearing housing (20, 22, 124).

7. Wiper bearing according to Claim 6, **characterized in that** the protective cap (92, 94, 96) and the seal (74, 78, 80) are designed as a two-component component.

8. Wiper bearing according to Claim 6, **characterized in that** the protective cap (98) and the seal (76) are designed as a single piece from a rubber-elastic material.

9. Wiper bearing according to one of Claims 6 to 8, **characterized in that** the protective cap (96) is latched in a shaft recess (100).

10. Wiper bearing according to one of Claims 6 to 9, **characterized in that** the bearing housing (124, 22) has a joining slope (102, 104) on the end side towards the protective cap (90, 92, 94, 96, 98).

11. Wiper bearing according to one of the preceding claims, **characterized in that**, on the side with the crank plate (38), a rubber sleeve (72) is fastened on the bearing housing (20) and, towards a thrust ring (106) or towards the crank plate (38), seals off the axial bearing (56) and the radial bearing (34) to the outside.

## Revendications

1. Palier d'essuie-glace comprenant
- un boîtier de palier (10, 12, 14, 16, 18, 20, 22, 124) dans lequel est monté un arbre d'entraînement (24, 26, 28) avec un palier radial (30, 32, 34), en étant guidé du côté frontal par une bague d'arrêt (36, 106) et par une plaque de manivelle (38, 40) qui sont solidaires de l'arbre d'entraînement (24, 26, 28) et forment, avec le boîtier de palier, directement ou indirectement, des paliers axiaux (42, 44, 46, 48, 50, 52, 54, 56, 58, 60),
- un joint d'étanchéité (62, 64, 66, 68, 70, 72, 74, 76, 78, 80) assurant l'étanchéité entre le boîtier de palier (10, 12, 14, 16, 18, 20, 22, 124) et une partie (36, 106, 38, 40, 90, 92, 94, 96, 98) solidaire de l'arbre d'entraînement (24, 26, 28), ce joint étant monté à l'extérieur du palier axial (42, 44, 46, 48, 50, 52, 54, 56, 58, 60) à une certaine distance radiale du palier radial (30, 32, 34),
**caractérisé en ce que**
le joint d'étanchéité (62, 64, 66, 68, 70, 72, 74, 76, 78, 80) assure l'étanchéité par rapport à l'extérieur des fentes des paliers axiaux et radiaux (42, 44, 46, 48, 50, 52, 54, 56, 58, 60 ; 30, 32, 34).

2. Palier d'essuie-glace selon la revendication 1,
**caractérisé en ce que**
le joint d'étanchéité (62, 64, 66, 72) est solidaire du boîtier de palier (10, 12, 14, 16, 18, 20) et est en contact avec une lèvre d'étanchéité (82) agissant axialement sur la bague d'arrêt (36, 106) ou sur la plaque de manivelle (38, 40) dans la zone extérieure faisant suite radialement au palier axial (42, 44, 46, 54, 56).

3. Palier d'essuie-glace selon la revendication 2,
**caractérisé en ce que**
le boîtier de palier (10) présente des douilles de palier (84, 86) emmanchées à force dans le boîtier de palier (10), et au moins une de ces douilles fait saillie sur la face frontale (88) du boîtier de palier (10) et sa face frontale constitue une portée de palier pour les paliers axiaux (42) montés sur la bague d'arrêt (36) ou sur la plaque de manivelle (38), le joint d'étanchéité (62) étant monté entre la face frontale (88) du boîtier de palier (10) et la bague d'arrêt (36) ou la plaque de manivelle (38).

4. Palier d'essuie-glace selon une des revendications précédentes,
**caractérisé en ce que**
le boîtier de palier (12, 14, 16, 18, 20, 22, 124) est en matière plastique.

5. Palier d'essuie-glace selon la revendication 4,
**caractérisé en ce que**
le boîtier de palier (14) et le joint d'étanchéité (66) sont réalisés sous la forme d'un élément à deux composants.

6. Palier d'essuie-glace selon une des revendications précédentes,
**caractérisé en ce qu'**
un capot de protection (90, 92, 94, 96, 98) est solidaire en rotation et avec étanchéité, de l'arbre d'entraînement (24), et entre le capot (90, 92, 94, 96, 98) et le boîtier de palier (20, 22, 124) est monté un joint radial d'étanchéité (70, 74, 76, 78, 80).

7. Palier d'essuie-glace selon la revendication 6,
**caractérisé en ce que**
le capot de protection (92, 94, 96) et le joint d'étanchéité (74, 78, 80) sont réalisés sous la forme d'un élément à deux composants.

8. Palier d'essuie-glace selon la revendication 6,
**caractérisé en ce que**
le capot de protection (98) et le joint d'étanchéité (76) constituent une seule pièce en matériau élastique comme du caoutchouc.

9. Palier d'essuie-glace selon une des revendications 6 à 8,
**caractérisé en ce que**
le capot de protection (96) est bloqué dans une entaille de l'arbre (100).

10. Palier d'essuie-glace selon une des revendications 6 à 9,
**caractérisé en ce que**
le boîtier de palier (124, 22) présente sur sa face frontale dirigée vers le capot de protection (90, 92, 94, 96, 98) un chanfrein de jonction (102, 104).

11. Palier d'essuie-glace selon une des revendications précédentes,
**caractérisé en ce que**
du côté de la plaque de manivelle (38) est fixée une manchette en caoutchouc (72) sur le palier de boîtier (20), et cette manchette assure l'étanchéité par rapport à l'extérieur du palier axial (56) et du palier radial (34) en étant appliquée sur une bague d'arrêt (106) ou sur la plaque de manivelle (38).
